# EUROPEAN PATENT SPECIFICATION

(11) **EP 1 521 807 B1**
(45) Date of publication and mention of the grant of the patent: **08.03.2006**
(21) Application number: 03763836.8
(22) Date of filing: 14.07.2003
(51) Int. Cl.: C08L 77/12, C08K 7/04, C08K 7/14, C08K 7/18, C08K 7/28

(54) **FORMALDEHYDE-FREE AQUEOUS BINDER COMPOSITION FOR MINERAL FIBERS**
FORMALDEHYDFREIE WÄSSRIGE BINDEMITTELZUSAMMENSETZUNG FÜR MINERALFASERN
COMPOSITION DE LIANT AQUEUSE SANS FORMALDEHYDE POUR FIBRES MINERALES

(30) Priority: 15.07.2002 EP 02015781
(43) Date of publication of application: 13.04.2005
(73) Proprietor: Rockwool International A/S, 2640 Hedehusene (DK)
(72) Inventor: HANSEN, Erling, Lennart, DK-2820 Gentofte (DK); NISSEN, Povl, DK-3650 Olstykke (DK); HUSEMOEN, Thor, DK-4000 Roskilde (DK)
(74) Representative: Barz, Peter
(86) International application number: PCT/EP2003/007597
(87) International publication number: WO 2004/007615

(56) References cited:
- WO-A-00/39212
- DE-A- 10 018 936

## Description

### Field of the Invention

The present invention relates to a formaldehyde-free aqueous binder composition for mineral fibers, a method of producing a bonded mineral fiber product using the binder composition, and a mineral fiber product comprising mineral fibers in contact with the cured binder composition.

### Background of the invention

Mineral fiber products generally comprise mineral fibers such as, e.g., man-made vitreous fibers (MMVF), glass fibers, ceramic fibers, basalt fibers, slag wool and stone wool, bonded together by a cured thermoset polymeric binder material. For use as thermal or acoustical insulation products, bonded mineral fiber mats are generally produced by converting a melt of suitable raw materials to fibers in conventional manner, for instance by a spinning cup process or by a cascade rotor process. The fibers are blown into a forming chamber and, while airborne and while still hot, are sprayed with a binder solution and randomly deposited as a mat or web onto a travelling conveyor. The fiber mat is then transferred to a curing oven where heated air is blown through the mat to cure the binder and rigidly bond the mineral fibers together.

Binder-coated mineral fiber products are often of the commodity type, and thus cost becomes a driving factor, generally ruling out the use of expensive binder resins. Due to their excellent cost/performance ratio, the resins of choice in the past have been phenol/formaldehyde resins which can be economically produced, and can be extended with urea prior to use as a binder.

Over the past decades however, minimization of Volatile Organic Compound (VOC) emissions in conjunction with existing and proposed legislation directed to the lowering or elimination of formaldehyde have led to extensive investigations into not only reducing emissions from conventional formaldehyde-based binders, but also into candidate replacement binders which are free of formaldehyde.

These research efforts resulted in a number of non-phenol/formaldehyde binder compositions, for instance, the binder compositions based on polycarboxy polymers and polyols as disclosed in EP-A-583086, EP-A-990727 and US-A-5,318,990.

Another group of non-phenol/formaldehyde binders for mineral fibers are the addition/elimination reaction products of aliphatic and/or aromatic anhyrides with alkanolamines, e.g., as disclosed in WO 99/36368, WO 01/05725, WO 01/96460 and WO 02/06178. These mineral fiber binders exhibit excellent binding properties but may require expensive starting materials and, in particular, a high proportion of expensive anhydride reactants in order to achieve the desired water solubility, curing speed and curing density.

### Summary of the Invention

Accordingly, it was an object of the present invention to provide a formaldehyde-free aqueous binder composition which is particularly suitable for bonding mineral fibers, which exhibits excellent binding characteristics, in particular, suitable curing speed and strength, has good water solubility and dilutability and may be economically produced from less expensive starting materials.

A further object of the present invention was to provide a mineral fiber product wherein mineral fibers are bonded with the cured binder composition.

In accordance with a first aspect of the present invention, there is provided a formaldehyde-free aqueous binder composition comprising:
a binder component (A) obtainable by reacting at least one alkanolamine with at least one carboxylic anhydride and, optionally, treating the reaction product with a base; and
a binder component (B) which comprises at least one carbohydrate.

In accordance with a second aspect of the present invention, there is provided a method of producing a bonded mineral fiber product which comprises the steps of contacting the mineral fibers or mineral fiber product with a formaldehyde-free aqueous binder composition as defined above, and curing the binder composition.

In accordance with a third aspect of the present invention, there is provided a mineral fiber product comprising mineral fibers in contact with the cured binder composition defined above.

### Description of the Preferred Embodiments

The formaldehyde-free aqueous binder composition according to the present invention comprises two binder components, i.e.
(A) the reaction product of at least one alkanolamine with at least one carboxylic anhydride, optionally treated with a base; and
(B) at least one carbohydrate.

### Binder Component (A)

Binder component (A) comprises the water-soluble reaction product of an alkanolamine with a carboxylic anhydride.

Preferred alkanolamines for use in the preparation of binder component (A) are alkanolamines having at least two hydroxy groups such as, for instance, alkanolamines represented by the formula 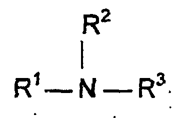
wherein R¹ is hydrogen, a C₁₋₁₀ alkyl group or a C₁₋₁₀ hydroxyalkyl group; and R² and R³ are C₁₋₁₀ hydroxyalkyl groups.

Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, 3-amino-1,2-propanediol, 2-amino-1,3-propanediol and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3. Curing tests with the system THPA/TMA have surprisingly shown that a lower molar ratio of THPA to TMA results in a higher curing speed.

In the preparation of binder component (A), the proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least, 0.6. By employing these minimum ratios, a too high excess of free unreacted acid is avoided which under specific conditions could lead to a displacement of binder in the curing oven, i.e. to a nonuniform distribution in amount of binder between the bottom and top of the mineral wool mat or web. Furthermore, high amounts of unreacted acid may increase corrosiveness.

On the other hand, the properties of the final binder composition, including binder components (A) and (B), such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less. In general, the final binder composition has an equivalent ratio of (NH+OH) / (COOH) within the range of from 1.3 to 1.5.

The reaction between the alkanolamine and carboxylic anhydride reactants is carried out in the usual manner, for instance, as described in WO 99/36368, WO 01/05725, WO 01/96460 and WO 02/06178, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA) and triethanolamine (TEA). The base is preferably added to the reaction mixture after the reaction between the alkanol amine and the carboxylic anhydride has been actively stopped by adding water.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, azelaic acid, succinic acid, tartaric acid and trimellitic acid.

Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt%, and up to 50, preferably up to 30 wt.%, more preferably up to 15 wt.%, based on the binder composition.

### Binder Component (B)

Binder component (B) is at least one carbohydrate preferably selected from monosaccharides such as xylose, glucose and fructose; disaccharides such as sucrose, maltose and lactose; oligosaccharides such as glucose syrup and fructose syrup; and polysaccharides, preferably water-soluble polysaccharides, such as pectin, dextrin, starch, modified starch and starch derivatives.

Examples of suitable modified starches and starch derivatives are cooked starch, hydrolytically or enzymatically degraded starch, oxidized starch, dialdehyde starch, dicarboxy starch and chemically modified starch such as starch ethers, e.g. hydroxyethyl starch, hydroxypropyl starch and cationic starches; and starch esters, e.g. starch phosphates and starch citrates.

The currently preferred carbohydrate component is glucose syrup; e.g., the product marketed by Cerestar under the trademark C*Sweet® 01411 having a carbohydrate composition of 3% dextrose, 12% maltose, 16% maltotriose and 69% higher sugars.

For most applications, the binder composition comprises 60 wt.% or more, preferably 60 to 95 wt.% and more preferably 60 to 80 wt.%, of binder component (A), and 40 wt.% or less, preferably 5 to 40 wt.% and more preferably 20 to 40 wt.% of binder component (B), based on the total solids content of components (A) and (B).

### Other Components

The binder composition according to the present invention may comprise one or more conventional binder additives.

These include, for instance, curing accelerators such as, e.g., β-hydroxylalkylamides; the free acid and salt forms of phosphoric acid, phosphonic acid, phosphinic acid, citric acid and adipic acid. Other strong acids such as boric acid, sulphuric acid, nitric acid and p-toluenesulphonic acid may also be used, either alone or in combination with the just mentioned acids, in particular with phosphoric, phosphonic or phosphinic acid. Other suitable binder additives are silane coupling agents such as γ-aminopropyltriethoxysilane; thermal stabilizers; UV stabilizers; surface active agents; fillers such as clay, silicates and magnesium sulfate; pigments such as titanium dioxide; hydrophobizing agents such as fluorinated compounds, mineral oils and silicone oils; flame retardants; corrosion inhibitors; urea; and others.

These binder additives and adjuvants are used in conventional amounts generally not exceeding 20 % by weight of the binder solids. The amount of curing accelerator in the binder composition is generally between 0.05 and 5 wt.%, based on solids.

### Final Binder Composition

The binder composition comprising binder component (A) and binder component (B) preferably has a solids content of from 60 to 75 wt.%. This concentration range is frequently employed if the binder is to be transported.

A binder composition comprising binder component (A), binder component (B) and binder additives preferably has a solids content of from 10 to 40 wt.%. This is often the concentration range of the binder in storage containers before use.

In a form ready for application, the binder preferably has a solids content of from 1 to 20 wt.%.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of binder component (A) (lower reaction temperature, stopping the reaction by adding water at an earlier reaction stage, etc.), by selecting an appropriate carbohydrate component (B) and by properly adjusting the relative amounts of the binder components and water solvent.

### Mineral fiber product

The formaldehyde-free aqueous binder composition according to the present invention may be applied to mineral fibers or mineral fiber products by conventional techniques such as, e.g., air or airless spraying, rotating disc atomization, padding, saturating, roll coating, curtain coating, beater deposition, or the like.

The mineral fibers may be any of man-made vitreous fibers (MMVF), glass fibers, ceramic fibers, basalt fibers, slag wool, rock wool, stone wool and others. The mineral fiber products are, for instance, woven and nonwoven fabrics, mats, batts, slabs, sheets and other shaped articles which find use, for example, as thermal or acoustical insulation materials, vibration damping, construction materials, reinforcing materials for roofing or flooring applications, as filter stock, as horticultural growing media and in other applications.

For the manufacture of conventional thermal or acoustical insulation products, the binder is normally applied in an amount of 0.1 to 15 %, preferably 0.3-10 %, of the bonded mineral fiber product.

In general, the binder composition is applied, normally by spraying, immediately after fiberization of the mineral melt whereafter the coated mineral wool is cured in a curing oven wherein heated air is passed through the mineral wool web to cure the binder. Typically, the curing oven is operated at a temperature of from about 200°C to about 400°C. Preferably, the curing temperature ranges from about 225 to about 300°C. Generally, the curing oven residence time is from 30 seconds to 20 minutes, depending on, for instance, the product density.

Besides conventional curing by heat (e.g. heated air) other curing methods may be used, for example curing with microwave or infrared radiation. If desired, the mineral wool web may also be subjected to a shaping process before curing.

The bonded mineral fiber product emerging from the curing oven in the form of e.g. a batt may be cut to a desired format and, if appropriate, compressed for packaging and shipping. It may also be employed as an intermediate for the manufacture of shaped articles and composite materials.

Although the formaldehyde-free aqueous binder composition according to the present invention is particularly useful for bonding mineral fibers, it may equally be employed in other applications typical for binders and sizing agents, e.g. as a binder for foundry sand, chipboard, cellulosic fibers, non-woven paper products, composites, molded articles, coatings etc.

The following examples are intended to further illustrate the formaldehyde-free aqueous binder composition and the use thereof as a binder for mineral fiber products. In these examples, the solids content is determined in accordance with DIN 16916, Part 2, Section 5.13, with the modification that the sample is heated at 200°C for one hour.

### Example 1

### Preparation of binder component (A1)

82 kg of diethanolamine (DEA) are charged in a 400 I reactor and heated to 60°C. Then, a first portion of 72 kg of tetrahydrophthalic anhydride (THPA) is added. After raising the temperature and keeping it at 130°C for 1 hour, 75 kg of trimellitic anhydride (TMA) and a second portion of 50 kg of THPA are added. The reaction mixture is cooled to 95°C, water is added and the mixture is stirred for 1 hour. After cooling of the reaction mixture to below 30°C, a binder component (A1) having an equivalent ratio of (NH+OH) / (COOH) of 0,85 is obtained.

### Example 2

### Preparation of binder component (A2)

90 kg of diethanolamine (DEA) are charged in a 400 l reactor and heated to 60°C. Then, a first portion of 79 kg of tetrahydrophthalic anhydride (THPA) is added. After raising the temperature and keeping it at 130°C for 1 hour, 71 kg of trimellitic anhydride (TMA) and a second portion of 33 kg of THPA are added. The reaction mixture is cooled to 95°C, water is added and the mixture is stirred for 1 hour. After cooling of the reaction mixture to below 30°C, a binder component (A2) having an equivalent ratio of (NH+OH) / (COOH) of 1,0 is obtained.

### Example 3

### Preparation of binder component (A3)

91 kg of diethanolamine (DEA) are charged in a 400 I reactor and heated to 60°C. Then, 80 kg of tetrahydrophthalic anhydride (THPA) are added. After raising the temperature and keeping it at 130°C for 1 hour, 100 kg of trimellitic anhydride (TMA) are added. The reaction mixture is cooled to 95°C, water is added and the mixture is stirred for 1 hour. After cooling of the reaction mixture to below 30°C, a binder component (A3) having an equivalent ratio of (NH+OH) / (COOH) of 1,0 is obtained.

### Example 4

### Preparation of binder component (A4)

90 kg of diethanolamine (DEA) are charged in a 400 I reactor and heated to 60°C. Then, 75 kg of tetrahydrophthalic anhydride (THPA) are added. After raising the temperature and keeping it at 130°C for 1 hour, 50 kg of trimellitic anhydride (TMA) are added. The reaction mixture is cooled to 95°C, water is added and the mixture is stirred for 1 hour. After cooling of the reaction mixture to below 30°C, a binder component (A4) having an equivalent ratio of (NH+OH) / (COOH) of 1,45 is obtained.

### Example 5

### Preparation of Binders Nos. 1 to 3 according to the present invention

For the preparation of Binders Nos. 1 to 3 according to the present invention, each of the binder components (A1) to (A3) obtained in Examples 1 to 3 above is mixed with a binder component (B) which comprises glucose syrup (trademark: Cerestar® 01411, having a dextrose equivalent of 30) in a weight ratio of 3 parts (A) : 1 part (B), based on the solids content.

The equivalent ratio (NH+OH) / (COOH) of the three binders is 1.4 (Binder No. 1), 1.59 (Binder No. 2) and 1.57 (Binder No. 3), respectively.

For preparing the final binders, to each of the binder compositions is added a coupling agent (3-aminopropyltriethoxysilane) and a curing accelerator (2%, based on solids, of phosphinic acid), whereafter the mixture is diluted to 20% solids to make the final binder.

### Preparation of a Comparative Binder

In a manner similar to that described for Binder Nos. 1 to 3 according to the present invention, a Comparative Binder is prepared from binder component (A4) alone, i.e. no binder component (B) is used.

### Example 6

### Results of factory trials

The results recited in the following table represent the average of 6 samples. The standard deviations are given in brackets.

The delamination strength is tested according to EN 1607. Aged in autoclave means 15 minutes at 100% RH, 1 ato and 121°C. Aged in climate chamber means 7 days at >95% RH and 70°C.

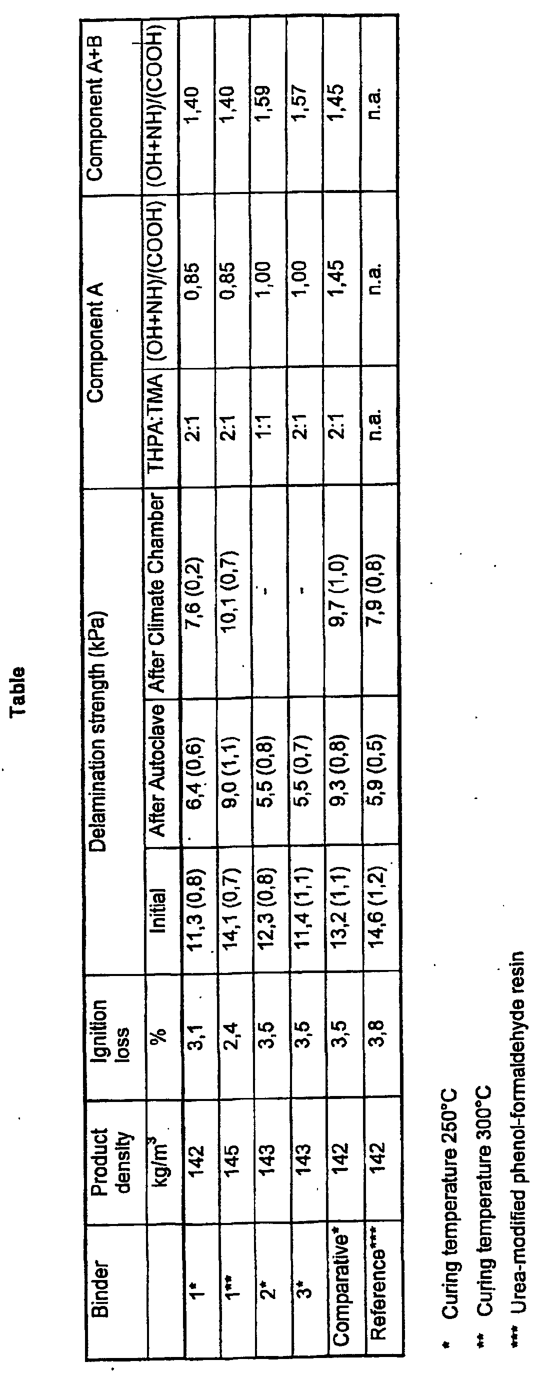

## Claims

1. A formaldehyde-free aqueous binder composition comprising:
a binder component (A) obtainable by reacting at least one alkanolamine with at least one carboxylic anhydride and, optionally, treating the reaction product with a base; and
a binder component (B) which comprises at least one carbohydrate.

2. The formaldehyde-free aqueous binder composition of claim 1 wherein binder component (A) comprises the reaction product of at least one alkanolamine with at least one carboxylic anhydride in an equivalent ratio of amine and hydroxy groups (NH+OH) to carboxy groups (COOH) of at least 0.4, preferably at least 0.6.

3. The formaldehyde-free aqueous binder composition of claim 1 or 2 wherein the equivalent ratio of amine and hydroxy groups (NH+OH) to carboxy groups (COOH) in the final binder composition is 2.0 or less, preferably 1.7 or less.

4. The formaldehyde-free aqueous binder composition of any one of claims 1 to 3 which comprises 60 wt.% or more of binder component (A); and 40 wt% or less of binder component (B), based on the total solids content of components (A) and (B).

5. The formaldehyde-free aqueous binder composition of claim 4 which comprises 60 to 95 wt.% of binder component (A); and 5 to 40 wt% of binder component (B), based on the total solids content of components (A) and (B).

6. The formaldehyde-free aqueous binder composition of claim 5 which comprises 60 to 80 wt.% of binder component (A); and 20 to 40 wt% of binder component (B), based on the total solids content of components (A) and (B).

7. The formaldehyde-free aqueous binder composition of any one of claims 1 to 6 wherein the at least one carboxylic anhydride is selected from cycloaliphatic and/or aromatic anhydrides.

8. The formaldehyde-free aqueous binder composition of claim 7 wherein the carboxylic anhydride comprises a combination of a cycloaliphatic and an aromatic anhydride.

9. The formaldehyde-free aqueous binder composition of claim 8 wherein the molar ratio of cycloaliphatic anhydride to aromatic anhydride is within the range of from 0.1 to 10, preferably 0.5 to 3.

10. The formaldehyde-free aqueous binder composition of any one of claims 7 to 9 wherein cycloaliphatic anhydride is selected from the group consisting of tetrahydrophthalic anhydride, hexahydrophthalic anhydride and methyl-tetrahydrophthalic anhydride.

11. The formaldehyde-free aqueous binder composition of any one of claims 7 to 10 wherein the aromatic anhydride is selected from the group consisting of phthalic anhydride, methylphthalic anhydride, trimellitic anhydride and pyromellitic dianhydride.

12. The formaldehyde-free aqueous binder composition of any one of claims 1 to 11 wherein the alkanolamine is selected from the group consisting of diethanolamine, triethanolamine, diisopropanolamine, triisopropanolamine, methyldiethanolamine, ethyldiethanolamine, n-butyldiethanolamine, methyldiisopropanolamine, ethylisopropanolamine, 3-amino-1,2-propanediol, 2-amino-1,3-propanediol and tris(hydroxymethyl)aminomethane.

13. The formaldehyde-free aqueous binder composition of any one of claims 1 to 12 wherein the at least one carbohydrate is selected from the group consisting of monosaccharides such as xylose, glucose and fructose; disaccharides such as sucrose, maltose and lactose; oligosaccharides such as glucose syrup and fructose syrup; and preferably water-soluble polysaccharides such as pectin, dextrin, starch, modified starch and starch derivatives.

14. The formaldehyde-free aqueous binder composition of any one of claims 1 to 13 further comprising a curing accelerator and, optionally, other conventional binder additives.

15. A method of producing a bonded mineral fiber product which comprises the steps of contacting the mineral fibers or mineral fiber product with a formaldehyde-free aqueous binder composition according to any one of claims 1 to 14, and curing the binder composition.

16. Mineral fiber product comprising mineral fibers in contact with the cured binder composition according to any one of claims 1 to 14.

## Patentansprüche

1. Formaldehyd-freie wässrige Bindemittelzusammensetzung, umfassend:
eine Bindemittelkomponente (A), erhältlich durch Umsetzen mindestens eines Alkanolamins mit mindestens einem Carbonsäureanhydrid und gegebenenfalls Behandeln des Reaktionsprodukts mit einer Base; und
eine Bindemittelkomponente (B), welche mindestens ein Kohlenhydrat umfasst.

2. Formaldehyd-freie wässrige Bindemittelzusammensetzung nach Anspruch 1, wobei die Bindemittelkomponente (A) das Reaktionsprodukt von mindestens einem Alkanolamin mit mindestens einem Carbonsäureanhydrid in einem Äquivalentverhältnis von Amin- und Hydroxygruppen (NH + OH) zu Carboxygruppen (COOH) von mindestens 0,4, bevorzugt mindestens 0,6, umfasst.

3. Formaldehyd-freie wässrige Bindemittelzusammensetzung nach Anspruch 1 oder 2, wobei das Äquivalentverhältnis von Amin- und Hydroxygruppen (NH + OH) zu Carboxygruppen (COOH) in der End-Bindemittelzusammensetzung 2,0 oder weniger, bevorzugt 1,7 oder weniger, ist.

4. Formaldehyd-freie wässrige Bindemittelzusammensetzung nach irgendeinem der Ansprüche 1 bis 3, welche 60 Gew.-% oder mehr Bindemittelkomponente (A); und 40 Gew.-% oder weniger Bindemittelkomponente (B), bezogen auf den Gesamtfeststoffgehalt der Komponenten (A) und (B), umfasst.

5. Formaldehyd-freie wässrige Bindemittelzusammensetzung nach Anspruch 4, welche 60 bis 95 Gew.-% Bindemittelkomponente (A); und 5 bis 40 Gew.-% Bindemittelkomponente (B), bezogen auf den Gesamtfeststoffgehalt der Komponenten (A) und (B), umfasst.

6. Formaldehyd-freie wässrige Bindemittelzusammensetzung nach Anspruch 5, welche 60 bis 80 Gew.-% Bindemittelkomponente (A); und 20 bis 40 Gew.-% Bindemittelkomponente (B), bezogen auf den Gesamtfeststoffgehalt der Komponenten (A) und (B), umfasst.

7. Formaldehyd-freie wässrige Bindemittelzusammensetzung nach irgendeinem der Ansprüche 1 bis 6, wobei das mindestens eine Carbonsäureanhydrid aus cycloaliphatischen und/oder aromatischen Anhydriden ausgewählt ist.

8. Formaldehyd-freie wässrige Bindemittelzusammensetzung nach Anspruch 7, wobei das Carbonsäureanhydrid eine Kombination von einem cycloaliphatischen und einem aromatischen Anhydrid umfasst.

9. Formaldehyd-freie wässrige Bindemittelzusammensetzung nach Anspruch 8, wobei das Molverhältnis von cycloaliphatischem Anhydrid zu aromatischem Anhydrid im Bereich von 0,1 bis 10, bevorzugt 0,5 bis 3, liegt.

10. Formaldehyd-freie wässrige Bindemittelzusammensetzung nach irgendeinem der Ansprüche 7 bis 9, wobei das cycloaliphatische Anhydrid aus der Gruppe bestehend aus Tetrahydrophthalsäureanhydrid, Hexahydrophthalsäureanhydrid und Methyltetrahydrophthalsäureanhydrid ausgewählt ist.

11. Formaldehyd-freie wässrige Bindemittelzusammensetzung nach irgendeinem der Ansprüche 7 bis 10, wobei das aromatische Anhydrid aus der Gruppe bestehend aus Phthalsäureanhydrid, Methylphthalsäureanhydrid, Trimellitsäureanhydrid und Pyromellitsäuredianhydrid ausgewählt ist.

12. Formaldehyd-freie wässrige Bindemittelzusammensetzung nach irgendeinem der Ansprüche 1 bis 11, wobei das Alkanolamin ausgewählt ist aus der Gruppe bestehend aus Diethanolamin, Triethanolamin, Diisopropanolamin, Triisopropanolamin, Methyldiethanolamin, Ethyldiethanolamin, n-Butyldiethanolamin, Methyldiisopropanolamin, Ethylisopropanolamin, 3-Amino-1,2-propandiol, 2-Amino-1,3-propandiol und Tris(hydroxymethyl)aminomethan.

13. Formaldehyd-freie wässrige Bindemittelzusammensetzung nach irgendeinem der Ansprüche 1 bis 12, wobei das mindestens eine Kohlenhydrat ausgewählt ist aus der Gruppe bestehend aus Monosacchariden, wie Xylose, Glucose und Fructose; Disacchariden, wie Sucrose, Maltose und Lactose; Oligosacchariden, wie Glucosesirup und Fructosesirup; und vorzugsweise wasserlöslichen Polysacchariden, wie Pektin, Dextrin, Stärke, modifizierter Stärke und Stärkederivaten.

14. Formaldehyd-freie wässrige Bindemittelzusammensetzung nach irgendeinem der Ansprüche 1 bis 13, die ferner einen Härtungsbeschleuniger und gegebenenfalls andere herkömmliche Bindemitteladditive umfasst.

15. Verfahren zur Herstellung eines gebundenen Mineralfaserprodukts, welches die Schritte des Kontaktierens der Mineralfasern oder des Mineralfaserprodukts mit einer Formaldehyd-freien wässrigen Bindemittelzusammensetzung nach irgendeinem der Ansprüche 1 bis 14 und des Härtens der Bindemittelzusammensetzung umfasst.

16. Mineralfaserprodukt, umfassend Mineralfasern im Kontakt mit der gehärteten Bindemittelzusammensetzung nach irgendeinem der Ansprüche 1 bis 14.

## Revendications

1. Composition de liant aqueux sans formaldéhyde, comprenant :
A) un composant de liant qu'on peut obtenir en faisant réagir au moins une alcanolamine avec au moins un anhydride carboxylique, et en option, en traitant avec une base le produit de cette réaction,
B) et un composant de liant qui comprend au moins un glucide.

2. Composition de liant aqueux sans formaldéhyde, conforme à la revendication 1, dans laquelle le composant (A) de liant comprend le produit de réaction d'au moins une alcanolamine et d'au moins un anhydride carboxylique, mis en jeu en un rapport d'équivalents d'au moins 0,4, et de préférence d'au moins 0,6, des groupes amino et hydroxyle (NH + OH) aux groupes carboxyle (COOH).

3. Composition de liant aqueux sans formaldéhyde, conforme à la revendication 1 ou 2, dans laquelle le rapport d'équivalents des groupes amino et hydroxyle (NH + OH) aux groupes carboxyle (COOH) dans la composition de liant finale vaut au plus 2,0, et de préférence au plus 1,7.

4. Composition de liant aqueux sans formaldéhyde, conforme à l'une des revendications 1 à 3, qui comprend au moins 60 % en poids du composant (A) de liant et au plus 40 % en poids du composant (B) de liant, par rapport à la quantité totale de solides des composants (A) et (B).

5. Composition de liant aqueux sans formaldéhyde, conforme à la revendication 4, qui comprend de 60 à 95 % en poids du composant (A) de liant et de 5 à 40 % en poids du composant (B) de liant, par rapport à la quantité totale de solides des composants (A) et (B).

6. Composition de liant aqueux sans formaldéhyde, conforme à la revendication 5, qui comprend de 60 à 80 % en poids du composant (A) de liant et de 20 à 40 % en poids du composant (B) de liant, par rapport à la quantité totale de solides des composants (A) et (B).

7. Composition de liant aqueux sans formaldéhyde, conforme à l'une des revendications 1 à 6, dans laquelle ledit anhydride carboxylique au nombre d'au moins un est choisi parmi les anhydrides cycloaliphatiques et/ou aromatiques.

8. Composition de liant aqueux sans formaldéhyde, conforme à la revendication 7, dans laquelle l'anhydride carboxylique comprend un mélange d'un anhydride cycloaliphatique et d'un anhydride aromatique.

9. Composition de liant aqueux sans formaldéhyde, conforme à la revendication 8, dans laquelle le rapport molaire de l'anhydride cycloaliphatique à l'anhydride aromatique vaut de 0,1 à 10, et de préférence de 0,5 à 3.

10. Composition de liant aqueux sans formaldéhyde, conforme à l'une des revendications 7 à 9, dans laquelle l'anhydride cycloaliphatique est choisi dans l'ensemble formé par l'anhydride tétrahydrophtalique, l'anhydride hexahydrophtalique et l'anhydride méthyl-tétrahydrophtalique.

11. Composition de liant aqueux sans formaldéhyde, conforme à l'une des revendications 7 à 10, dans laquelle l'anhydride aromatique est choisi dans l'ensemble formé par l'anhydride phtalique, l'anhydride méthyl-phtalique, l'anhydride trimellitique et le dianhydride pyromellitique.

12. Composition de liant aqueux sans formaldéhyde, conforme à l'une des revendications 1 à 11, dans laquelle l'alcanolamine est choisie dans l'ensemble formé par les diéthanolamine, triéthanolamine, diisopropanolamine, triisopropanolamine, méthyl-diéthanolamine, éthyl-diéthanolamine, n-butyl-diéthanolamine, méthyl-diisopropanolamine, éthyl-isopropanolamine, 3-amino-1,2-propanediol, 2-amino-1,3-propanediol et tris(hydroxyméthyl)aminométhane.

13. Composition de liant aqueux sans formaldéhyde, conforme à l'une des revendications 1 à 12, dans laquelle ledit glucide au nombre d'au moins un est choisi dans l'ensemble formé par les monosaccharides, tels les xylose, glucose et fructose, les disaccharides, tels les saccharose, maltose et lactose, les oligosaccharides comme le sirop de glucose et le sirop de fructose, et les polysaccharides, de préférence hydrosolubles, comme la pectine, la dextrine, l'amidon, les amidons modifiés et les dérivés d'amidon.

14. Composition de liant aqueux sans formaldéhyde, conforme à l'une des revendications 1 à 13, qui comprend en outre un accélérateur de durcissement, et en option, d'autres adjuvants habituels de liant.

15. Procédé de fabrication d'un produit constitué de fibres minérales liées, lequel procédé comporte le fait de mettre un produit en fibres minérales d'une ou plusieurs sortes en contact avec une composition de liant aqueux sans formaldéhyde, conforme à l'une des revendications 1 à 14, et le fait de faire durcir cette composition de liant.

16. Produit constitué de fibres minérales, comprenant des fibres minérales en contact avec une composition de liant conforme à l'une des revendications 1 à 14, durcie.
